Europäisches Patentamt

European Patent Office

Office européen des brevets

(19)

(11) Veröffentlichungsnummer: **0 336 398 B1**

(12) **EUROPÄISCHE PATENTSCHRIFT**

(45) Veröffentlichungstag der Patentschrift: **25.11.92**

(21) Anmeldenummer: **89105986.7**

(22) Anmeldetag: **05.04.89**

(51) Int. Cl.⁵: **B01D  17/022**

(54) **Separatorelement.**

(30) Priorität: **06.04.88 DE 3811441**

(43) Veröffentlichungstag der Anmeldung:
**11.10.89 Patentblatt  89/41**

(45) Bekanntmachung des Hinweises auf die
Patenterteilung:
**25.11.92 Patentblatt  92/48**

(84) Benannte Vertragsstaaten:
**BE DE ES FR GB IT NL**

(56) Entgegenhaltungen:
**EP-A- 0 060 106      DE-A- 3 145 964**
**DE-A- 3 440 506      GB-A- 589 720**
**GB-A- 825 192        GB-A- 2 020 564**
**US-A- 3 256 997**

(73) Patentinhaber: **Lorey, Manfred**
**Gänsgasse 9**
**W-6456 Langenselbold(DE)**

(72) Erfinder: **Pötz, Karl**
**Kreuzbergstrasse 37**
**W-6370 Oberursel /Ts.(DE)**
Erfinder: **Lorey, Manfred**
**Gänsgasse 9**
**W-6456 Langenselbold(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

# Beschreibung

Die Erfindung betrifft ein Separatorelement zur Verwendung in einer Vorrichtung zur Abscheidung von Wasser und Verunreinigungen aus Fluiden mit einem hohlen Filterkörper, der innerhalb eines Coalescerelementes der Vorrichtung anordenbar ist, der eine erste hydrophobe Filterschicht aufweist, die einen inneren Strömungsraum umgibt und der im Einbauzustand in die Vorrichtung von einem äußeren Strömungsraum umgeben ist, um den das Coalescerelement angeordnet ist, wobei die eine Stirnseite des Filterkörpers verschlossen ist und wobei die andere Stirnseite eine Strömungsöffnung aufweist.

Separatorelemente dienen dazu, aus Fluiden, insbesondere Flüssigkeiten und Gasen, wie Flugkraftstoffen und Erdgasen, Wasser und Verunreinigungen zu entfernen.

Bekannte Separatorelemente sind üblicherweise nur für eine bestimmte API-Klasse ausgelegt zugelassen, d. h. sie können jeweils nur innerhalb eines vorbestimmten Bereichs eingesetzt werden. So müssen Separatorelemente im Mobilbereich 0,5 Gew.-% Wasser, im stationären Bereich 3 Gew.-% Wasser und in Prozeßbereichen bis 10 Gew.-% Wasser aus mit Wasser praktisch nicht mischbaren Flüssigkeiten entfernen bzw. deren Wassergehalt verringern. Keines der Separatorelemente im Prozeßbereich oder stationären Bereichen erreicht jedoch die Separiergenauigkeit der im mobilen Bereich eingesetzten Elemente. Bisher konnten Separatorelemente keinesfalls im Bereich hoher Wechselbelastung eingesetzt werden.

Ein Separatorelement der eingangs genannten Art ist aus der EP-B-60 106 bekannt. Diese Druckschrift beschreibt im einzelnen ein Separatorelement in Form eines Oberflächenspannungsseparators, der in einer Vorrichtung zur Abscheidung von Wasser und Verunreinigungen aus Fluiden angeordnet ist. Mit dem Separator soll es möglich sein, nach mehreren Abscheidungen von größeren Wasserpartikeln evtl. noch verbliebene feine Wasserpartikel aus dem Fluid abzuscheiden, die dann durch eine zentrale Öffnung in den Bodenbereich eines den Separator umgebenden Behälters abgeleitet werden.

Es besteht jedoch bei Vorrichtungen zur Abscheidung von Wasser und Verunreinigungen aus Fluiden die Forderung, daß eine Wasserabscheidung auch bei extremen Wechselbelastungen, d. h. ständig schwankenden Wassermengen, sichergestellt wird, so daß die einwandfreie Funktion der nachgeschalteten Aggregate nicht beeinträchtigt wird, so daß eine optimale Auslastung, Wirtschaftlichkeit und Funktionssicherheit erreicht werden kann.

Bei bisher bekannten Filterelementen wird angestrebt, daß die Wasserabscheidung bei verschiedenen Wasserraten konstant bleibt, was jedoch bei Belastungsschwankungen und inbesondere bei Belastungsextremen oft nicht erfüllt werden kann.

Wie insbesondere Fig. 1 der EP-B-60 106 zeigt, wird bei der bekannten Vorrichtung versucht, dieses Problem durch eine Vergrößerung des Abstandes zwischen einem Coalescerelement und dem Separatorelement zu lösen, um so eine hohe Sedimentation der Wassertropfen zu erreichen. Ein befriedigendes Ergebnis kann jedoch bei variierender Wasserbelastung nicht erreicht werden.

Darüber hinaus weist die aus der EP-B-60 106 bekannte Vorrichtung ferner Leit- und Umlenkeinrichtungen auf, die jedoch ebenfalls nicht den gewünschten Effekt ergeben.

Auch vorgeschaltete Filter und/oder Zyklone können hierbei nicht den gewünschten Erfolg erbringen.

Weiter wurden in Separatorelemente Strömungselemente in Form von ungleich gelochten Rohren (DE-A-1 645 749 oder DE-A-3 145 964) eingebaut, wordurch zwar eine gleichmäßigere Flächenbelastung erreicht wurde, nicht jedoch die gewünschte Separierleistung bei wechselnder Wasserbelastung erzielt wurde.

Obwohl durch die vorstehend erwähnten Maßnahmen die Durchflußströme gesteigert und der Abscheidegrad verbessert worden ist, besteht weiterhin das Problem, daß bei Wechselbelastung in Form von einerseits sehr kleinen Wassermengen und/oder kleinen oder kleinsten Wassertropfen und andererseits großen Wassermengen, beispielsweise plötzlich rapide ansteigenden Wassergehalten um einen Faktor von 10-100 und darüber, gegenüber der zuvor eingestellten Wasserbelastung, eine zufriedenstellende Funktion in Frage gestellt ist.

Darüber hinaus besteht das Problem, daß große Wassermengen mit den üblichen Separatorelementen zwar größtenteils aus den zu behandelnden Flüssigkeiten und Gasen entfernt, nicht jedoch aber völlig abgeschieden werden können. So reicht eine im Prozeßbereich übliche 97- bis 98%ige Entfernung von Wasser aus Flüssigkeiten keinenfalls für den Einsatz der so gereinigten Flüssigkeiten, z. B. in Flugzeugbetankungsbereichen, aus.

Der Erfindung liegt daher die Aufgabe zugrunde, ein Separatorelement der im Oberbegriff des Anspruchs 1 angegebenen Art so fortzubilden, daß ein gleichmäßiger Abscheidegrad auch bei extremen und schnellen Wasserwechselbelastungen gewährleistet ist.

Die Lösung dieser Aufgabe erfolgt durch die Merkmale des Anspruches 1.

Mit dem erfindungsgemäßen Separatorelement lassen sich nunmehr nicht nur sehr geringe Wassergehalte, beispielsweise 100 ppm, sondern auch sehr hohe Wassergehalte von 3 % und darüber derart entfernen, daß sich in der filtrierten Flüssigkeit kein ungelöstes Wasser mehr feststellen läßt. Demzufolge wird mit dem erfindungsgemäßen Separatorelement ein Universalfilterelement zur Verfügung gestellt, mit dem insbesondere plötzlich auftretende hohe Wasserbelastungen und Verunreinigungen problemlos beseitigt werden können.

Die erfindungsgemäßen Filterschichten können die gleiche mittlere Porengröße und den gleichen Differenzdruck aufweisen, der sich zwischen dem Innenraum und dem Außenraum beim Durchfließen mit Flugkraftstoff einstellt. Vorzugsweise ist jedoch die mittlere Porengröße der ersten Filterschicht gegenüber der zweiten Filterschicht geringer und liegt üblicherweise zwischen 1:2 - 1:5, vorzugsweise etwa 1:3.

Die mittlere Porengröße der beiden Filterschichten hängt üblicherweise vom Einsatzzweck ab. So liegt die mittlere Porengröße der ersten Filterschicht zwischen 1-40, vorzugsweise zwischen 5-25 μm, insbesondere bei der Reinigung von Flugkraftstoffen, während diejenige der zweiten Filterschicht zwischen 30 -80, vorzugsweise 40-60, insbesondere bei etwa 50 μm liegt.

Durch die unterschiedliche Siebwirkung und wasserabstoßende Kraft werden die unterschiedlichen Lagen differenzierend und sukzessive wirksam. So scheidet die äußere grobporigere Filterlage große Wassertropfen ab und bildet somit einen Abweis- und Schutzschirm für die feinporigere Innenlage, die die feineren Wassertropfen abscheidet, die die Poren der zweiten Filterschicht durchdrungen haben und in den Zwischenraum gelangt sind. Die jeweils abgetrennten Tropfen sinken in dem Außenraum bzw. dem Zwischenraum nach unten, wobei die im Zwischenraum befindlichen Wassertropfen in den Sedimentationssammelraum absinken, der mit dem Außenraum durch die Poren der zweiten Filterschicht hindurch in Strömungsverbindung steht. Sie sammeln sich bis zu einer vorgegebenen Höhe an, die größer ist als die hydrophobe Wirkung der zweiten Filterschicht, aber kleiner ist als die hydrophobe Wirkung der feinporigeren Innenschicht. Durch diesen hydrostatischen Druck wird also der Differenzdruck an der zweiten Filterschicht kompensiert und schließlich überwunden, so daß die angesammelten Wassertropfen durch die zweite Filterschicht hindurch nach außen gegen die normale Flußrichtung fließen und sich dort mit den Wassertropfen des Außenraumes vereinigen und in den Sumpf absinken. Vorteilhafterweise ist in diesem Sedimentationssammelraum im Bereich der ersten Filterschicht eine den Durchfluß sperrende Schicht bis wenigstens zur Höhe der sich ansammelnden Wasserschicht vorgesehen, wodurch sicher ein Durchschlagen von Wasser von dem Zwischenraum in den Innenhohlraum verhindert wird.

Die zweite Filterschicht besteht aus einem hydrophoben Material, vorzugsweise einem membranartigen Material oder einem textilen Flächengebilde, vorzugsweise einem Gewebe, das die vorstehend genannte Porengröße aufweist und insbesondere einen sehr geringen Differenzdruck, beispielsweise zwischen 2-4 cm Flüssigkeitssäule besitzt.

Demgegenüber besteht die erste Membranlage aus einer hydrophoben Filtermembran. Sie besteht aus einer mikroporösen Struktur und ist üblicherweise aus PTFE oder einem Silikonkautschuk oder damit beschichtetem Metallgewebe gefertigt.

Aufgrund der mikroporösen Struktur liegt der Differenzdruck der ersten Filterschicht sehr viel höher als derjenigen der zweiten Filterschicht und beträgt etwa 100-400 cm Flüssigkeitssäule (ca. 0,1 - 0,4 bar).

Das erfindungsgemäße Element ist nicht nur auf die Anordnung von zwei Lagen beschränkt. Es können vielmehr mehrere hintereinander angeordnete Lagen angeordnet werden, wobie jeweils in Fließrichtung die Lagen eine feinporigere Ausbildung aufweisen. Insofern kann - sofern notwendig - eine weitere Abstufung der Wasserabscheidung erreicht werden. Üblicherweise reicht jedoch - wie bereits vorstehend erläutert - die Anordnung von zwei Lagen aus, um einen weiteren Trennbereich sicher zu umfassen, da sich die einzelnen Lagen differenziert und sukzessive gegenseitig ergänzen und abschirmen.

Die Abstimmung der einzelnen Lagen kann den jeweiligen Betriebsverhältnissen angepaßt werden. So kann die äußere Lage auswechselbar gestaltet sein und bei Beschädigung ausgetauscht oder auch gegen eine grobporigere oder feinporigere Lage gewechselt werden.

Durch das aufeinander abgestimmte differenzierende Zusammenwirken der einzelnen Lagen wird eine ungleiche bzw. unbefriedigende Wasserabscheidung der in der Praxis unvermeidlichen Wechselbelastungen, insbesondere bei Feldbedingungen im militärischen Bereich (Regenwasser, Grundwasser u.s.w.) praktisch ausgeschlossen.

Es kommt noch hinzu, daß die gesamte Anordnung redundant sicher ausgestaltet werden kann, da beide Lagen zusammenwirken. So schützt die äußere grobporigere Filterschicht die innere feinporigere Lage. Andererseits stellt die innere Lage einen zuverlässigen Monitor dar, wenn die äußere Lage - aus welchen Gründen auch immer (Beschädigung, zu hohe Wasserbeaufschlagung) - zu viel Wasser durchläßt, da deren Differenzdruck bei Wasserbeaufschlagung zwischen 200-500 ppm oder Verunreinigungen, rapide ansteigt. Insofern kann durch Bestimmung des Differenzdruckes der ersten Filterschicht und Überwachung dieses Druckes ein Alarm ausgelöst werden, der zum Stillstand der gesamten Vorrichtung benutzt werden kann.

Insofern kann also ein nicht einwandfreies Arbeiten des vorgeschalteten Coalescerelements, was beispielsweise zum Passieren von Schmutz oder Wasser führen kann, in der Regel noch während des Tankvorganges sicher erkannt werden. Letztere Anordnung stellt ebenfalls eine bevorzugte Ausführungsform der Erfindung dar.

Mit dem erfindungsgemäßen Separatorelement ist ein zwangsläufig ausgleichendes und ergänzendes Zusammenwirken der einzelnen Lagen in direkter Relation zur Belastung ohne erkennbare Verzögerung möglich.

Das erfindungsgemäße Separatorelement wird vorzugsweise für den vertikalen Einbau und den Durchfluß von außen nach innen verwendet. Es ist jedoch nicht auf diesen Einsatz beschränkt. So ist auch ein Durchfluß von innen nach außen ebenso wie eine horizontale Anordnung möglich.

An Ausführungsbeispielen soll die Erfindung unter Bezugnahme auf die Zeichnungen näher erläutert werden.

Es zeigen:

Fig. 1      einen Längsschnitt durch eine vertikale Abscheidevorrichtung;

Fig. 2      einen Querschnitt durch die Abscheidevorrichtung gemäß Fig. 1 entlang der Linie I-I;

Fig. 3      eine horizontale Ausführungsform der Abscheidevorrichtung, in Ansicht mit Teilschnitten;

Fig. 4      einen Querschnitt durch die Ausführungsform gemäß Fig. 3 entlang der Linie II-II;

Fig. 5      eine schematische Darstellung einer Ausführungsform eines Filter-Wasserabscheiders im Längsschnitt und

Fig. 6      einen Querschnitt durch die Ausführungsform gemäß Fig. 5 entlang der Linie III-III.

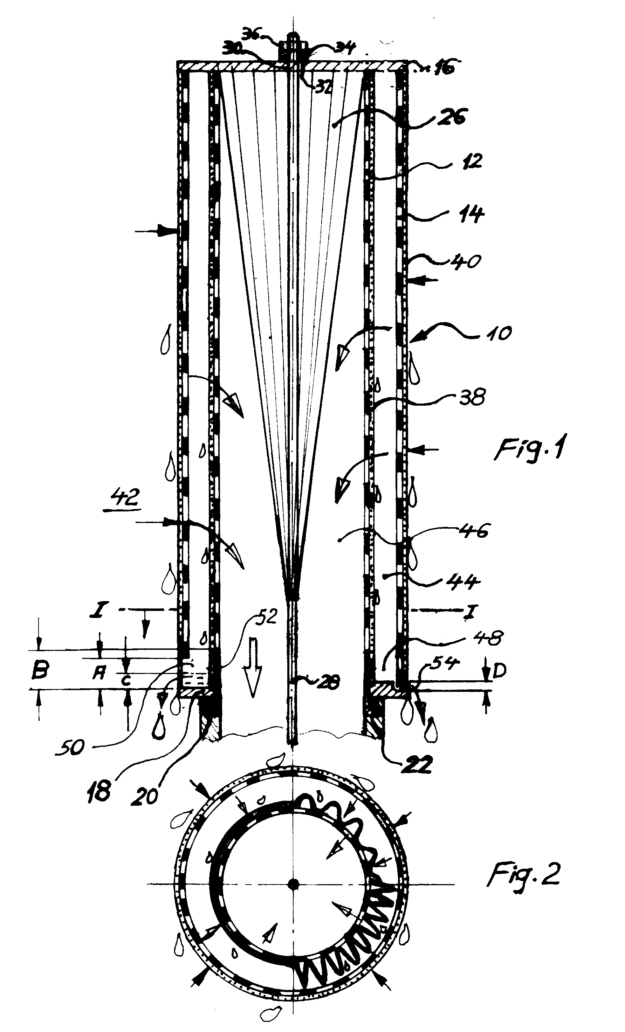

In Fig. 1 ist das Separatorelement zur Abscheidung von Verunreinigungen (Wasser) mit dem Bezugszeichen 10 bezeichnet. Mit den in Fig. 1 eingezeichneten Pfeilen ist die Flußrichtung des zu reinigenden Fluids ersichtlich. Sie erfolgt von außen nach innen, die Abströmung von oben nach unten (Vertikalanordnung).

Das Vorrichtungsgehäuse sowie das dem Separatorelement 10 vorgeschaltete Coalescerelement wurde in Fig. 1 unberücksichtigt gelassen, entsprechen jedoch vorteilhafterweise denjenigen der Anordnung, die in der DE-A-3440506 beschrieben ist.

Das Separatorelement 10 besteht im wesentlichen aus dem inneren Stützkörper 12, dem äußeren Stützkörper 14, der an der einen Stirnseite des Separatorelements 10 angebrachten Verschlußplatte 16, dem am gegenüberliegenden Ende vorgesehenen Aufnahmeflansch 18 mit einem O-Ring 20, welcher gegen den Rand 22 der Austrittsöffnung, die in der Gehäuseanordnung vorgesehen ist, radial abdichtet.

Innerhalb des Separatorelements ist vorteilhafterweise ein Strömungselement 26 vorgesehen, das sich in Richtung auf die Austrittsöffnung verjüngt. Ein derartiges Strömungselement ist in der DE-A 3644489 beschrieben, auf deren Offenbarung Bezug genommen wird.

Zur Montage des Separatorelements 10 ist eine Spindel 28 vorgesehen, die eine Bohrung 30, die in der Verschlußplatte 16 vorgesehen ist, und das Strömungselement 26 axial durchsetzt und die sich im nicht dargestellten Gehäuse verankern läßt. Durch eine Dichtung 32, ein Zwischenstück 34 und eine Mutter 36, die sich am gegenüberliegenden Ende der Spindel 28 befinden, läßt sich das Separatorelement 10 gegenüber dem nicht dargestellten Gehäuse klar fixieren.

Die Stützkörper 12 und 14 weisen auf ihrer Oberfläche eine Vielzahl von Ausnehmungen auf, so daß das zu reinigende Fluid praktisch ohne Behinderung durch die Stützkörper 12 und 14 hindurchgeführt werden kann. Sie dienen lediglich zur Abstützung der ersten hydrophoben Filterschicht 38 bzw. der zweiten hydrophoben Filterschicht 40. Beide Filterschichten 38 und 40 sind jeweils über die gesamte axiale Länge, d.h. von der Verschlußplatte 16 bis zum Aufnahmeflansch 18 auf den Stützkörpern 12 und 14 angeordnet, ohne daß irgendwelche Zwischenräume zwischen den beiden Endplatten gebildet werden. Insofern muß die zu reinigende Flüssigkeit bzw. das zu reinigende Gas durch die beiden Filterschichten 38 und 40 hindurchfließen, um vom Außenraum 42 durch den zwischen den beiden Stützkörpern 12 und 14 vorgesehenen Zwischenraum 44 in den Innenraum 46 zu gelangen.

Der Zwischenraum 44 ist vorteilhafterweise als Ringraum ausgebildet, sofern das Separatorelement rohrförmig, insbesondere zylindrisch ausgebildet ist. Letztere Ausbildung ist jedoch nicht auf die rohrförmige Ausbildung beschränkt. Vielmehr sind auch pyramidenförmige oder kanisterförmige Ausbildungen einsetzbar.

Die erste Filterschicht 38 und die zweite Filterschicht 40 bestehen aus dem eingangs erwähnten Material und weisen die eingangs erwähnten Porengrößen auf, so daß hierauf Bezug genommen wird. Vorteilhafterweise besteht die erste Filterschicht 38 aus einer mikroporösen PTFE-Membrane mit einer mittleren Porengröße von etwa 15-20 $\mu$m, während die äußere zweite Filterschicht 40 aus einem PTFE-Filtergewebe mit einer mittleren Porengröße von etwa 50-60 $\mu$m besteht.

In Fig. 2 ist die Ausbildung der ersten Filterschicht 38 bzw. diejenige der zweiten Filterschicht 40 gezeigt. Dabei kann die erste Filterschicht 38 glatt oder zur Erhöhung der Separierfläche gewellt oder sogar gefaltet sein, während die zweite Filterschicht 40 mit glatter Oberfläche versehen ist; ggf. kann auch diese gewellt oder gefaltet sein.

Im Sedimentationsbereich 48 ist gemäß einer ersten Ausführungsform, die in Fig. 1 im linken Teil dargestellt ist, ein Ringspalt 50 zwischen dem äußeren Stützkörper 14 und dem Aufnahmeflansch 18 unter Bildung eines Abstandes A vorgesehen. Der innere Stützkörper 12 ist vorteilhafterweise im Sedimentationsbereich 48 mit einem den Durchfluß sperrenden Element 52 mit einer axialen Erstreckung B vom Aufnahmeflansch 18 weg versehen, wobei der axiale Abstand B mindestens dem Abstand A entspricht, üblicherweise jedoch etwas größer ist.

Der Ringspalt 50 ist zum besseren Abfluß des sedimentierten Wassers aus dem Zwischenraum 44 vorgesehen. Wie bereits vorstehend erwähnt, wird das Wasser aufgrund seines hydrostatischen Drucks etwa eine Höhe C - wie in Fig. 1 dargestellt - einnehmen und dann aufgrund des hydrostatischen Druckes durch die Poren der zweiten Filterschicht 40 abfließen. Dabei verhindert die Höhe B des Sperrelements 52 ein Durchschlagen des Sedimentationswassers aus dem Zwischenraum 44 in den Innenraum 46.

Gemäß einer zweiten Ausführungsform, die in Fig. 1 in der rechten Darstellung gezeigt ist, ist im Aufnahmeflansch 18 eine Ringnut 54 mit der Tiefe D vorgesehen, die zur Stirnseite des äußeren Stützkörpers 14 weist, der berührungsfrei in diese Ringnut 54 unter Bildung eines Siphons oder Wasserschlosses eintaucht. In dieser Ausführungsform kann sich vorteilhafterweise die zweite Filterschicht 40 nur bis zum Ende des äußeren Stützkörpers 14 erstrecken, ohne daß sie mit dem Aufnahmeflansch 18 in Berührung kommt. Insofern wird unmittelbar vom Zwischenraum 44 durch die Ringnut 54 hindurch eine Strömungsverbindung zum Außenraum 42 geschaffen.

Alternativ kann auch ein offener Ringspalt zwischen dem Aufnahmeflansch 18 und den Enden des Stützkörpers 14 und der zweiten Filterschicht 40 vorgesehen sein, sofern sichergestellt wird, daß das im Außenraum 42 sedimentierende Wasser nicht durch den gebildeten Ringspalt in den Zwischenraum 44 und von dort in den Innenraum 46 gesaugt wird.

In Fig. 1 ist eine stehende Anordnung gezeigt, die von außen nach innen durchströmt ist. Es ist jedoch aber auch eine hängende Anordnung einsetzbar. In diesem Fall befindet sich die Verschlußplatte 16 an der Stelle, an der gemäß Fig. 1 der Aufnahmeflansch 18 vorgesehen ist, während letzterer Aufnahmeflansch 18 einschließlich O-Ring 20 auf der gegenüberliegenden Seite angeordnet ist. Demzufolge befindet sich also der Sedimentationsbereich 48 benachbart zur Verschlußplatte 16 bei der hängenden Anordnung.

Andererseits sind natürlich auch beide Ausführungsformen von innen nach außen durchströmbar. In einem solchen Fall wechseln die Filterschichten ihre Lage, d.h. die zweite Filterschicht 40 befindet sich nunmehr benachbart zu innenraum 46, während die erste Filterlage 38 banchbart zum Außenraum 42 angeordnet ist. Desgleichen tauschen die Stützkörper 12 und 14 im Sedimentationsbereich 48 ihre Funktionen, soweit der Ringspalt 50, das Sperrelement 52 oder die Ringnut 54 betroffen sind. Insofern weist also der Ringspalt 50 bzw. die Ringnut 54 zum Innenraum 46, während das Sperrelement 52 zum Außenraum 42 bei dieser Innennach-außen-Anordnung hinweist.

Das in Fig. 1 und 2 gezeigte Separatorelement 10 funktioniert auf folgende Weise. Das zu reinigende Fluid, insbesondere mit Wasser und anderen Verunreinigungen beaufschlagte(r) Flugkraftstoff und Gase, wird zur Coalescierung durch ein nicht gezeigtes Coalescerelement durchgeführt, das das Separatorelement 10 umgibt. Aufgrund der coalescierenden Eigenschaften bilden sich größere Wassertropfen, die nach dem Austritt des Fluids aus dem Coalescerelement bereits auf der Innenseite des Elements herunter zu laufen beginnen bzw. im Zwischenraum zwischen dem Coalescerelement und dem Separatorelement 10 in Form großer Wassertropfen - wie in Fig. 1 gezeigt - heruntersinken. Durch die hydrophobe Sperrwirkung der zweiten Filterschicht werden diese großen Wassertropfen abgehalten, die erste Filterschicht 38 zu beaufschlagen. Insofern wird ein Großteil der coalescierten Wassertropfen bereits im Außenraum 42 in Folge der Trennwirkung der zweiten Filterschicht 40 abgeschieden. Der Rest an kleineren Wassertropfen, die die zweite Filterschicht 40 passiert haben, wird nunmehr an der Oberfläche der ersten Filterschicht 38 abgeschieden. Diese Wassertropfen - als kleinere Wassertropfen in Fig. 1 gezeigt - sedimentieren im Zwischenraum 44 in den Sedimentationsbereich 48 und werden aufgrund ihres eigenen Gewichtes durch den Ringspalt 50 bzw. die Ringnut 54 hindurch in den Außenraum 42 abgeschieden. Dabei ist der Begriff "Außenraum" erfindungsgemäß synonym mit dem Zuführungsraum, aus dem die zu separierende Flüssigkeit dem Separatorelement 10 zugeführt wird. So läßt sich mit dieser Separatorvorrichtung 10 ein mit 3 Gew.-% Wasser und mehr und/oder mit kleinsten Wassergehalten von 0,01% in Wechselwirkung beaufschlagter Flugkraftstoff derart reinigen, daß kein freies Wasser mehr im gereinigten Flugkraftstoff nachgewiesen werden kann. Dies konnte mit den üblichen Wassernachweisgeräten bei den Testläufen nachgewiesen werden (SHELL WATER DETECTOR der Firma Shell).

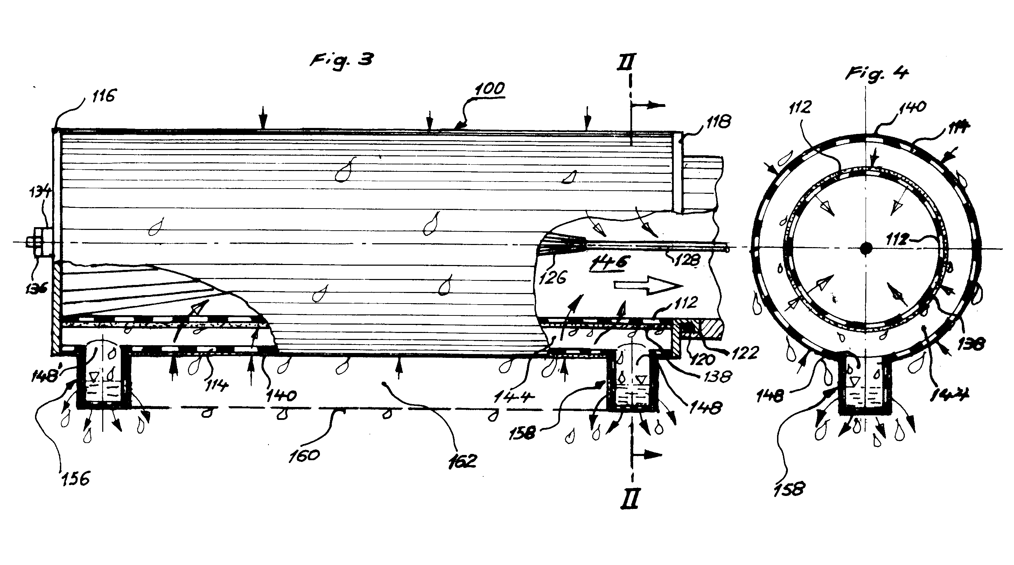

In Fig. 3 und 4 ist eine weitere Ausführungsform eines Separatorelements 100 gezeigt, das für den horizontalen Einbau ausgelegt ist und das von außen nach innen, entsprechend den in Fig. 3 und 4 gezeigten Pfeilen, durchströmt wird.

Diese Ausführungsform entspricht im Prinzip der Ausführungsform gemäß Fig. 1 und 2. Die Bezugszeichen dieser Ausführungsform sind gemäß der in Fig. 1 und 2 gezeigten Ausführungsform lediglich durch den Index 1 verändert. Ansonsten ensprechen die einzelnen Teile in ihrer Funktion einander.

Aufgrund der vertikalen Bauweise ist die in Fig. 3 und 4 gezeigte Ausführungsform in dem Sedimentationsbereich 148 verändert. Gemäß der Darstellung von Fig. 3 sind jeweils benachbart zu der Verschlußplatt 116 und dem Aufnahmeflansch 118 zwei Wassertaschen 156 bzw. 158 vorgesehen, die jeweils am äußeren Stützkörper 114 angebracht sind. Diese Wassertaschen 156, 158 bzw. Vertiefungen im äußeren Stützkörper 114 weisen die gleiche gitterförmige Struktur wie die Stützkörper 112, 114 auf, können also mit geringster Druckdifferenz von den zu behandelnden Fluiden durchflossen werden. Um diese Wassertaschen ist die zweite Filterschicht 140 rumgelegt und bedeckt diese vollständig. Die Tiefe der Wassertaschen ist so ausgelegt, daß sie größer ist als die Fluidsäule innerhalb der Wassertasche, die notwendig ist, um ein Abfließen der angestauten Flüssigkeit (Wasser) in den Außenraum zu bewirken. In Fig. 4 sind beispielhaft der Wasserpegel innerhalb der Wassertasche 156, 158, die zufließenden Wassertropfen sowie die aus der Wassertasche in den Außenraum 142 abfließende Wassermenge dargestellt.

In einer weiteren Ausführungsform ist anstelle dieser beiden Wassertaschen eine durchgehende Rinne vorgesehen, wie dies mit der gestrichelten Linie 160 dargestellt ist. Hier kann durch den Rinnenraum 162 das aufgefangene Wasser nach außen abfließen. Dieser über die gesamte Länge des Separatorelements 100 vorgesehene Rinne bzw. die beiden Wassertaschen 156, 158 dienen gleichermaßen zur Entfernung des Wassers.

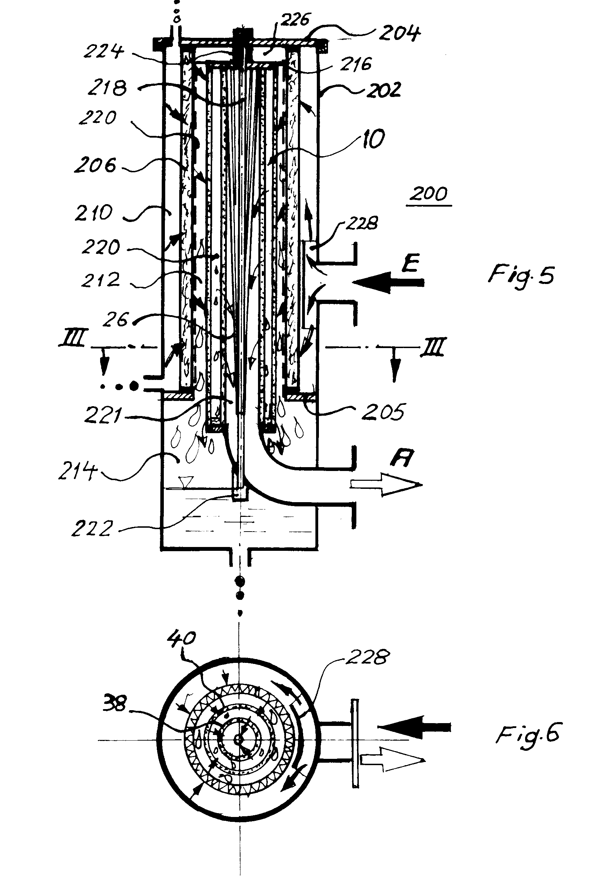

In Fig. 5 und 6 ist der Einbau eines Separatorelements in einen Filter-Wasserabscheider 200 gezeigt. Bei der Darstellung gemäß Fig. 5 und 6 wird ausdrücklich auf die Ausführungsform gemäß Fig. 1 und der dazugehörenden Beschreibung der DE-A 3440506 verwiesen, auf deren Offenbarung ausdrücklich Bezug genommen wird. Insofern beinhaltet die vorliegende Beschreibung nur das wesentliche.

In Fig. 5 und 6 ist ein Filter-Wasserabscheider 200 nach der DE-A 3440 506 dargestellt, dem ein erfindungsgemäßes Separatorelement 10 eingefügt wurde. Dieser Filter-Wasserabscheider 200 weist ein Gehäuse 202 auf. Es ist im Einbauzustand nach oben offen und kann mit Hilfe des Deckels 204 geschlossen werden. Das Gehäuse 202 besitzt einen Einlaß E und einen darunter angeordneten Auslaß A, deren Längsachsen senkrecht zur Gehäuselängsachse stehen, wobei der Auslaß A innerhalb des Gehäuses 202 gekrümmt ist.

Im Gehäuse 202 ist zwischen dem Deckel 204 und einem an der Gehäuseinnenwand angebrachten Ringflansch 205 ein Coalescerelement 206 eingespannt und bildet einen zwischen dem Gehäuse 202 und seiner Außenoberfläche angeordneten äußeren Strömungsraum 210, der unmittelbar mit dem Einlaß E verbunden ist, also für das zu behandelnde Fluid einen Zuführungsraum bildet. Im Innenraum des Coalescerelements 206 ist das Separatorelement 10 angeordnet, so daß ein ringförmiger mittlerer Strömungsraum 212 gebildet wird. Dieser mittlere Strömungsraum 212 wird außen mit einem Schutz- und Führungsgitter 220 begrenzt, auf dem das Coalescerelement 206 angeordnet ist.

Weiterhin ist koaxial zur Längsachse des Coalescerelementes 206 die zweite Elementstufe, also das Separatorelement 10 angeordnet, dessen unteres Ende fest mit einem zum Auslaß A führenden Rohr verbunden ist und in dieses mündet.

Wie bereits vorstehend festgestellt, ist der Außendurchmesser des Separatorelementes 10 geringer als der Innendurchmesser des Coalescerelements 206, so daß zwischen beiden der mittlere Strömungsraum 212 gebildet wird, der mit dem unten im Gehäuse 202 gebildeten Fluidsammelraum 214 in Strömungsverbindung steht.

Das Separatorelement 10 ist auf seiner Oberseite mit einer Zentrierplatte 216 verschlossen, die der Verschlußplatte 16 gemäß Fig. 1 entspricht. Durch die Zentrierplatte 216 und die Platte 204 ist eine Spindel 218 geführt, die sich durch diese, sowie den inneren Strömungsraum 221, das Strömungselement 26 in den Auslaß A erstreckt und dort in einer Nabe 222 befestigt ist, die mit dem Auslaßrohr verbunden ist. Ein Distanzring 224 ist derart auf der Spindel 218 angeordnet, daß um diesen ein Ringraum 226 gebildet ist, der zwischen dem Deckel 204 und der Zentrierplatte 216 sich befindet. Durch diesen Ringraum 226 wird das Separatorelement 10 vorteilhafterweise gegenüber dem Coalescerelement 206 nach unten verschoben.

Weiterhin weist das Gehäuse 202 auf seiner Innenoberfläche im Bereich des Einlasses E vorteilhafterweise ein Prallblech 228 auf, mit dem das zufließende Fluid nach der Seite sowie nach oben und nach unten abgelenkt wird.

Die Arbeitsweise dieser Vorrichtung 200 entspricht derjenigen gemäß der DE-A-4340506, d.h. durch den Einlaß E wird das zu reinigende Fluid zugeführt und im Bereich des Prallbleches 228 einheitlich über das gesamte Coalescerelement 206 verteilt. Beim Durchfließen des Coalescerelementes 206 erfolgt die Coalescierung des frei im Fluid befindlichen Wassers. Die gebildeten Wassertropfen sinken größtenteils im mittleren Strömungsraum 212 ab und gelangen von dort in den Fluidsammelraum 214, an dem sich auf seiner Unterseite ein Auslaß zum Abziehen des Wassers befindet. Eine weitgehende Trennung der groben Wassertropfen von den Feinen Wassertropfen wird durch die zweite Filterschicht 40 des Separatorelements 10 bewirkt. Die restlichen feinen Wassertröpfchen werden durch die erste Filterschicht 38 abgeschieden und gelangen am unteren Ende des Separatorelements durch die zweite Filterschicht hindurch in den Fluidsammelraum 214, wie dies vorstehend bei der Ausführungsform gemäß Fig. 1 und 2 beschrieben ist.

Das Separatorelement 10 bewirkt demzufolge eine belastungskonform differenzierte und sukzessive Abscheidung von Flüssigkeiten, insbesondere Wasser.

**Patentansprüche**

1. Separatorelement (10) zur Verwendung in einer Vorrichtung (200) zur Abscheidung von Wasser und Verunreinigungen aus Fluiden,
   mit einem hohlen Filterkörper,
   der innerhalb eines Coalescerelementes (206) der Vorrichtung (200) anordenbar ist,
   der eine erste hydrophobe Filterschicht (38; 138) aufweist, die einen inneren Strömungsraum (46; 146) umgibt, und
   der im Einbauzustand in die Vorrichtung (200) von einem äußeren Strömungsraum (42; 142; 212) umgeben ist, um den das Coalescerelement (206) angeordnet ist,
   wobei die eine Stirnseite (16) des Filterkörpers verschlossen ist und
   wobei die andere Stirnseite eine Strömungsöffnung aufweist, dadurch gekennzeichnet,
   daß vor der ersten Filterschicht (38; 138) anströmseitig wenigstens eine zweite hydrophobe Filterschicht (40; 140) vorgesehen ist, zwischen den Filterschichten (38; 138 und 40; 140) ein Zwischenraum (44; 144) gebildet ist und daß im Sedimentationsbereich (48, 148, 148') Mittel zur Abscheidung von Wasser aus dem Zwischenraum (44, 144) in den Zuströmraum vorgesehen sind.

2. Separatorelement nach Anspruch 1, dadurch gekennzeichnet, daß sich die erste Filterschicht (38, 138) und die zweite Filterschicht (40, 140) jeweils auf einen inneren Stützkörper (12, 112) bzw. äußeren Stützkörper (14, 114) angeordnet sind, wobei die gesamte Anordnung zylinderförmig ausgestaltet ist.

3. Separatorelement nach Anspruch 1 oder 2, dadurch gekennzeichnet, daß die mittlere Porengröße der zweiten Filterschicht (40, 140) gegenüber derjenigen der ersten Filterschicht (38, 138) zwischen 2:1 und 5:1, vorzugsweise bei etwa 3:1 liegt.

4. Separatorelement nach einem der Ansprüche 1 bis 3, dadurch gekennzeichnet, daß die mittlere Porengröße der ersten Filterschicht (38, 138) zwischen 1-40, vorzugsweise 5-25 $\mu$m und diejenige der zweiten Filterschicht (40, 140) zwischen 30-80, vorzugsweise 40-60, insbesondere bei etwa 50 $\mu$m liegt.

5. Separatorelement nach einem der Ansprüche 1 bis 4, dadurch gekennzeichnet, daß der Differenzdruck der ersten Filterschicht (38, 138) zwischen etwa 100-400 cm Flüssigkeitssäule und derjenige der zweiten Filterschicht (40, 140) zwischen 2-4 cm Flüssigkeitssäule liegt.

6. Separatorelement nach einem der Ansprüche 1 bis 5, dadurch gekennzeichnet, daß das Material für die erste und zweite Filterschicht PTFE oder Silikonkautschuk oder damit beschichteten Materialien ist.

7. Separatorelement nach einem der Ansprüche 1 bis 6, dadurch gekennzeichnet, daß die erste Filterschicht (38, 138) aus einer mikroporösen Membran mit einer mittleren Porengröße von etwa 15 $\mu$m und die zweite Filterschicht (40, 140) aus einem Gewebe mit einer mittlere Porengröße von etwa 50 $\mu$m besteht, wobei das Verhältnis der beiden Differenzdrücke zwischen 50 und 100 liegt.

8. Separatorelement nach Anspruch 1, dadurch gekennzeichnet, daß zu den Mitteln zum Abscheiden von Wasser ein Ringspalt (50) zwischen einem Aufnahmeflansch (18) und der Stirnseite des äußeren Stürzkörpers (14) sowie ein Sperrelement (52) gehören, das ringförmig vom Aufnahmeflansch (18) abgehend den inneren Stützkörper (12, 112) umfaßt und den Abfluß des sedimentierten Wassers in den Innenraum (46, 146) verhindert.

9. Separatorelement nach Anspruch 8, dadurch gekennzeichnet, daß die Höhe B des Sperrelements 52 gleich oder größer ist als die Höhe A des Ringspalts (50).

10. Separatorelement nach Anspruch 1, dadurch gekennzeichnet, daß zu den mitten zum Ausscheiden von Wasser eine im Aufnahmeflansch (18) oder der Verschlußplatte (16) vorgesehene Ringnut (54) gehört, in die der äußere Stützkörper (14) unter Bildung eines Siphons eintaucht.

11. Separatorelement nach Anspruch 1, dadurch gekennzeichnet, daß zu den Mitteln zum Ausscheiden von Wasser bei vertikalem Aufbau des Separatorelements (10) wenigstens eine vom äußeren Stützkörper (114) abgehende Wassertasche (156, 158) gehört, die ebenfalls mit der zweiten Filterschicht (140) umgeben ist und deren Tiefe größer ist als die Fluidsäule, die zur Ausscheidung des gesammelten sedimentierten Wassers in den Zuströmraum (142) notwendig ist.

12. Sepratorelement nach Anspruch 11, dadurch gekennzeichnet, daß sich die Wassertasche in Form einer Rinne (160) axial über die gesamte Außenoberfläche des Separatorelements (10) erstreckt.

## Claims

1. A separator element (10) for use in a device (200) for separating water and contaminants from fluids,
comprising a hollow filter body
which is adapted to be arranged within a coalescence element (206) of said device (200),
which is provided with a first hydrophobic filter layer (38; 138) surrounding an inner flow chamber (46; 146), and
which, when installed in said device (200), is surrounded by an outer flow chamber (42; 142; 212) around which the coalescence element (206) is arranged,
one end face (16) of the filter body being closed,
the other end face being provided with a flow opening,
characterized in
that said first filter layer (38; 138) is preceded, on the side of the incoming flow, by at least one second hydrophobic filter layer (40; 140),
that an interspace (44; 144) is defined between the filter layers (38; 138 and 40; 140) and
that the sedimentation area (48, 148, 148') has provided therein means for discharging water from the interspace (44; 144) into the space of the incoming flow.

2. A separator element according to claim 1, characterized in that the first filter layer (38, 138) and the second filter layer (40, 140) are respectively provided on an inner support body (12, 112) and on an outer support body (12, 112), whereby the whole arrangement has a cylindrical structural design.

3. A separator element according to claim 1 or 2, characterized in that the mean pore size of the second filter layer (40, 140) in relation to that of the first filter layer (38, 138) is between 2:1 and 5:1, preferably approximately 3:1.

4. A separator element according to any of claims 1 to 3, characterized in that the mean pore size of the first filter layer (38, 138) is between 1 and 40, preferably between 5 and 25 microns, and the mean pore size of the second filter layer (49, 140) is between 30 and 80, preferably between 40 and 60, in particular approximately 50 microns.

5. A separator element according to any of claims 1 to 4, characterized in that the differential pressure of the first filter layer (38, 138) lies between approximately 100 to 400 cm column of liquid and that of the second filter layer (40, 140) lies between 2 to 4 cm column of liquid.

6. A separator element according to any of claims 1 to 5, characterized in that the material for the first and for the second filter layer is PTFE or silicone caoutchouc or materials coated therewith.

7. A separator element according to any of claims 1 to 6, characterized in that the first filter layer (38, 138) consists of a microporous membrane having a mean pore size of approximately 15 microns and the second filter layer (40, 140) consists of a woven fabric having a means pore size of approximately 50 microns, the ratio of the two differential pressures being between 50 and 100.

8. A separator element according to claim 1, characterized in that said means for discharging water comprises an annular gap (50) between a reception flange (18) and the end face of the outer support body (14) as well as a blocking element (52), which, extending away from the reception flange (18) in an annular configuration, encloses the inner support body (12, 112) and prevents the sedimented water from flowing off into the inner chamber (46, 146).

9. A separator element according to claim 8, characterized in that the height B of the blocking element (52) is equal to or greater than the height A of the annular gap (50).

**10.** A separator element according to claim 1, characterized in that said means for discharging water include an annular groove (54), which is provided in the reception flange (18) or in the closure plate (16) and into which the outer support body (14) extends forming thus a siphon.

**11.** A separator element according to claim 1, characterized in that in the case of a vertical construction of the separator element (10), the means for discharging water include at least one water pocket (156, 158), which extends away from the outer support body (114) and which is also surrounded bythe second filter layer (140), the depth is also surrounded by the second filter layer (140), the depth of said at least one water pocket exceeding the column of fluid which is necessary for discharging the collected sedimented water into the space of the incoming flow (142).

**12.** A separator element according to claim 11, characterized in that the water pocket extends in the form of a groove (160) axially along the whole outer surface of the separator element (10).

**Revendications**

**1.** Elément de séparateur (10), destiné à être utilisé dans un dispositif (200) pour la séparation d'eau et des pollutions de fluides, comportant un corps creux de filtre, ledit corps creux de filtre étant disposable à l'intérieur d'un élément coalesceur (206) du dispositif (200), montrant une première couche filtrante hydrophobe (38; 138) qui entoure un espace d'écoulement intérieur (46; 146), étant entouré, en état d'installation dans le dispositif (200), d'un espace d'écoulement extérieur (42; 142; 212), autour duquel l'élément coalesceur (206) est arrangé, en quel corps creux de filtre l'un des côtés frontaux (16) du corps de filtre est fermé et l'autre côté frontal montre une ouverture d'écoulement, caractérisé en ce que devant la première couche filtrante (38; 138), au côté d'affluence, on a prévu au moins une seconde couche filtrante hydrophobe (40; 140), qu'on a développé un espace intermédiaire (44; 144) entre les couches filtrantes (38; 138 et 40; 140) et que, dans la zone de sédimentation (48; 148; 148'), on a prévu des moyens pour déposer d'eau de l'espace intermédiaire (44; 144) dans l'espace d'affluence.

**2.** Elément de séparateur selon la revendication 1, caractérisé en ce que la première couche filtrante (38; 138) et la seconde couche filtrante (40; 140) sont arrangées à chaque fois sur un support intérieur (12; 112) ou selon le cas sur un support extérieur (14; 114) et en quoi tout l'arrangement est développé en forme cylindrique.

**3.** Elément de séparateur selon la revendication 1 ou 2, caractérisé en ce que la grosseur moyenne de pore de la seconde couche filtrante (40; 140), en comparaison de celle de la première couche filtrante (38; 138), est entre 2:1 et 5:1, de préférence à environ 3:1.

**4.** Elément de séparateur selon une des revendications 1 à 3, caractérisé en ce que la grosseur moyenne de pore de la première couche filtrante (38; 138) est entre 1 à 40 $\mu$m, de préférence entre 5 à 25 $\mu$m et celle de la seconde couche filtrante (40; 140) est entre 30 à 80 $\mu$m, de préférence entre 40 é 60 $\mu$m, en particulier à environ 50 $\mu$m.

**5.** Elément de séparateur selon une des revendications 1 à 4, caractérisé en ce que la pression différentielle de la première couche filtrante (38; 138) est entre environ 100 à 400 cm de la colonne de liquide et celle de la seconde couche filtrante (40; 140) est entre 2 à 4 cm de la colonne de liquide.

**6.** Elément de séparateur selon une des revendications 1 à 5, caractérisé en ce que la matière pour la première et la seconde couche filtrante est le PTFE ou le caoutchouc ou le silicone ou un matière en couvri.

**7.** Elément de séparateur selon une des revendications 1 à 6, caractérisé en ce que la première couche filtrante (38; 138) est composée d'une membrane microporeuse d'une grosseur moyenne de pore d'environ 15 $\mu$m et la seconde couche filtrante (40; 140) est composée d'un tissu d'une grosseur moyenne de pore d'environ 50 $\mu$m, en quoi le rapport des deux pressions différentielles est entre 50 et 100.

**8.** Elément de séparateur selon la revendication 1, caractérisé en ce qu'un passage annulaire (50) entre un moyeu-flasque (18) et le côté frontal du support extérieur (14) aussi qu'un arrêt (52) font partie des moyens pour la séparation d'eau, ledit arrêt enserrant le support intérieur (12; 112) en provenant du moyeu-flasque (18) en forme d'anneau et empêchant l'écoulement de l'eau sédimenté vers l'intérieur.

9. Elément de séparateur selon la revendication 8, caractérisé en ce que la hauteur de l'arrêt 52 égale ou surpasse la hauteur A du passage annulaire (50).

10. Elément de séparateur selon la revendication 1, caractérisé en ce qu'une rainure annulaire (54) développé au moyeu-flasque (18) ou à l'obturateur (16) fait partie des moyens pour la séparation d'eau, dans quelle rainure annulaire le support extérieur (14) s'enfonce en formant un siphon.

11. Elément de séparateur selon la revendication 1, caractérisé en ce que, l'élément de séparateur (10) étant construit verticalement, au moins une poche à eau (156; 158) provenant du support extérieur (114) fait partie des moyens pour la séparation d'eau, ladite poche à eau étant également entourée de la seconde couche filtrante (140) et dont la profondeur surpasse la colonne de fluide qui est nécessaire pour la séparation de tout l'eau collectionné et sédimenté dans l'espace d'affluence (142).

12. Elément de séparateur selon la revendication 11, caractérisé en ce que la poche à eau s'étende axialement en forme d'une goulotte (160) sur toute la surface extérieure de l'élément séparateur (10).

Fig.1

Fig.2

Fig. 3

Fig. 4

Fig.5

Fig.6